# EUROPEAN PATENT APPLICATION

(11) **EP 1 615 321 A1**
(43) Date of publication of application: **11.01.2006**
(21) Application number: 04725499.0
(22) Date of filing: 02.04.2004
(51) Int. Cl.: H02K 33/00

(54) **PROPORTIONAL ROTARY TORQUER**

(30) Priority: 03.04.2003 JP 2003100832
(71) Applicant: MINEBEA Co., Ltd., Kitasaku-gun, Nagano-ken (JP)
(72) Inventor: ZHAO, Shen c/o MINEBEA CO., LTD Omori Manufacturin, Ota-Ku Tokyo 143-8543 (JP)
(74) Representative: Eisenführ, Speiser & Partner
(86) International application number: PCT/JP2004/004860
(87) International publication number: WO 2004/091077

(57) **Abstract**

Salient poles 3a formed at a rotor core 3 are structured such that their facing surfaces facing permanent magnets 1a and 1b are formed in the shapes of circular arcs of which the radii at the circumferential center portion and at the circumferential end portions are different from each other. The angle between the line connecting one of the circumferential outlines of one of the salient poles 3a and the rotation center of the rotor core 3 and the line connecting the other circumferential outline of the same salient pole 3a and the rotation center of the rotor core 3 is not less than 100 degrees. Permanent magnets 1a and 1b are structured such that the radial thickness B of each circumferential end portion is from 90% to 95% of the radial thickness A of each circumferential center portion, so as to have circular arc surfaces of which center positions are different from each other. As a result, by supplying an electric current to the rotor coils, a constant electro-magnetic torque is available within a relative angular displacement range of more than 90 degrees of the rotor and the stator, and the magnitude of electro-magnetic torque is in proportion to the magnitude of the exciting current. When the exciting current is supplied in the direction opposite to that of the above current, the direction of the electro-magnetic torque is opposite.

## Description

### TECHNICAL FIELD

This invention relates to a proportional rotary torquer which is equipped with a stator and a rotor, the stator having two permanent magnets, and the rotor having a rotor core which two salient poles are formed at and one or more rotor coils are wound around. The relative angle position of the rotor and the stator thereof is displaced by supplying an electric current to the rotor coils.

### BACKGROUND ART

Conventionally, for example, the amount of air sucked into an engine is controlled by adjusting the angular aperture of a butterfly valve mounted on a throttle body, which is executed by the switching drive of a DC motor. In the case, the butterfly valve on the throttle body is driven by the output torque of the DC motor, which is amplified by eleven times using a double reduction mechanism with two sets of gears, and the angular aperture of the valve is sensed using a potential angle detector composed of a thin film resistor and a set of metal brushes. However, in the case that a DC motor is used as a driver, a backlash resulted from the gears is inevitable, so that the angular aperture of the valve is difficult to be accurately controlled. Moreover, the detrimental effect on the durability, the lifetime, and the accuracy caused by the slide of the metal brushes on the surface of the thin film resistor is also inevitable in the potential angle detector.

On the other hand, to use rotary torquer, which require no gears causing a backlash, for above rotation control is considered. For example, in Japanese Unexamined Patent Application No. Hei 9-163708, a rotary torquer is proposed in which a stator coil is wound around a stator core having a pair of magnetic poles as a stator, a cylindrical rotor is provided around the stator, and two permanent magnets are secured on the inner surface of the rotor so as to face the above stator core. In this conventional technique, the thickness of both end portions of each magnet is set to be not more than 90 percent of that of the central portion. By controlling the thickness of the permanent magnets in this manner, the rotor can be reliably rotated only to two target positions without generating the opposite torque during supplying no electric current.

In the rotary torquer by above conventional technology, the rotor stops at an initial position when not supplying an electric current, and rotates to a predetermined angular position when supplying an electric current, and returns to the initial position by the torque of the permanent magnets when the supply of an electric current is stopped. The magnitude of the electro-magnetic torque generated by the exciting current varies with the angular position. Therefore, it is impossible to control the angular aperture of the valve for adjusting the above amount of the air sucked into the engine using the rotary torquer by the above conventional technology. That is, in order to perform angular positioning, the rotary torquer is required to have a characteristic such that the electro-magnetic torque is constant within a predetermined angular displacement range, and the electro-magnetic torque is proportional to the exciting current. However, the above conventional rotary torquer does not have this characteristic.

### DISCLOSURE OF THE INVENTION

The present invention was made in consideration of the above problems. An object of the present invention is to provide a proportional rotary torquer with a simple structure of which the rotor and the stator can be displaced to a predetermined relative angle position in accordance with the magnitude and the conducting direction of exciting current.

The present invention provides a proportional rotary torquer including: a stator having two permanent magnets; and a rotor having a rotor core which two salient poles are formed at, and one or more rotor coils are wound around, wherein an electric current is supplied to the rotor coils so that the relative angle position of the rotor and the stator is displaced. The permanent magnet, in the circumferential direction, has two end portions and one center portion, and the radial thickness of the end portions is from 90% to 95% of that of the center portion. The distance from the radial outline of a circumferential center portion of a salient pole to the rotation center of the rotor core is not more than 99% of that from the radial outline of a circumferential end portion of the salient pole to the rotation center of the rotor core. The angle between the line connecting one of the circumferential outlines of the salient pole and the rotation center of the rotor core and that connecting the other circumferential outline of the same salient pole and the rotation center of the rotor core is not less than 100 degrees.

In the above proportional rotary torquer, the electro-magnetic torque is constant within a relative angle range of more than 90 degrees of the rotor and the stator at a constant exciting current supplied to the rotor coils, and the electro-magnetic torque increases in proportion to the magnitude of the exciting current. When the exciting current is supplied in a direction opposite to the above current direction thereof, the direction of the generated electro-magnetic torque is opposite. Therefore, if an opposite torque against the rotation direction of the rotor is supplied by using, for example, an elastic member, and the magnitude of the opposite torque is proportional to the angular displacement of the rotor, the rotor can be displaced to and held at an arbitrary angle position in accordance with the magnitude and the direction of the exciting current with a simple structure. In the present invention, although the terms "rotor" and "stator" are used, the rotor and the stator are relatively rotated so as to achieve the object of the present invention, so that a structure in which the rotor is fixed and the stator is rotated may also be used.

Following feature can be shown as a concrete structure such that the electro-magnetic torque is constant within a relative angular displacement range of more than 90 degrees of the rotor and the stator at a constant exciting current supplied to the rotor coils.

The proportional rotary torquer can be structured such that the radial thickness of the circumferential end portions of the permanent magnet is smaller than that of the circumferential center portion thereof; the distance from the radial outline of the circumferential center portion of the salient pole to the rotation center of the rotor core is smaller than that from the radial outline of the circumferential end portions of the salient pole to the rotation center of the rotor core; and the angle between the line connecting one of circumferential outlines of the salient pole and the rotation center of the rotor core and that connecting the other circumferential outline of the same salient pole and the rotation center of the rotor core is an obtuse angle.

Alternatively, the proportional rotary torquer may be structured such that the rotor core and the permanent magnet have facing surfaces facing each other, and the facing surfaces of the rotor core and the permanent magnet are formed in the shapes of circular arc surfaces of which center positions are different from each other. The proportional rotary torquer may be structured such that the permanent magnet has a facing surface facing the rotor core, and the facing surface is formed in the shape of an elliptical surface. The proportional rotary torquer may be structured such that the permanent magnet has a facing surface facing the rotor core, and the facing surface at the circumferential end portion is formed in the shape of a flat-cut surface.

The proportional rotary torquer may be structured such that the rotor core has two facing surfaces respectively facing the two permanent magnets, and each of the facing surfaces is formed in the shapes of a plurality of circular arc surfaces of which center positions are different from each other. The proportional rotary torquer may be structured such that the permanent magnet has two circumferential end portions, each of which has a non-magnetized region formed thereat.

### BRIEF DESCRIPTION OF DRAWINGS

Fig. 1A and Fig.1B are views showing a structure of a proportional rotary torquer according to the Embodiment of the present invention; Fig. 1A is a cross-section view showing the structure thereof, and Fig. 1B is a longitudinal-section view showing the structure thereof.
Fig. 2 is a cross-section view showing the structure of the proportional rotary torquer in a state in which the rotor rotates across 90 degrees by an exciting current supplied to the rotor coil.
Fig. 3A is a plan view showing the structure of a rotor core, and Fig. 3B is a plan view showing the structure of a permanent magnet.
Fig. 4 is a graph showing one example of the relationship between the angular position of a rotor and the electro-magnetic torque at different magnitude of exciting current.
Fig. 5 is a cross-section view showing rotation of a rotor.

### BEST MODE FOR CARRYING OUT THE INVENTION

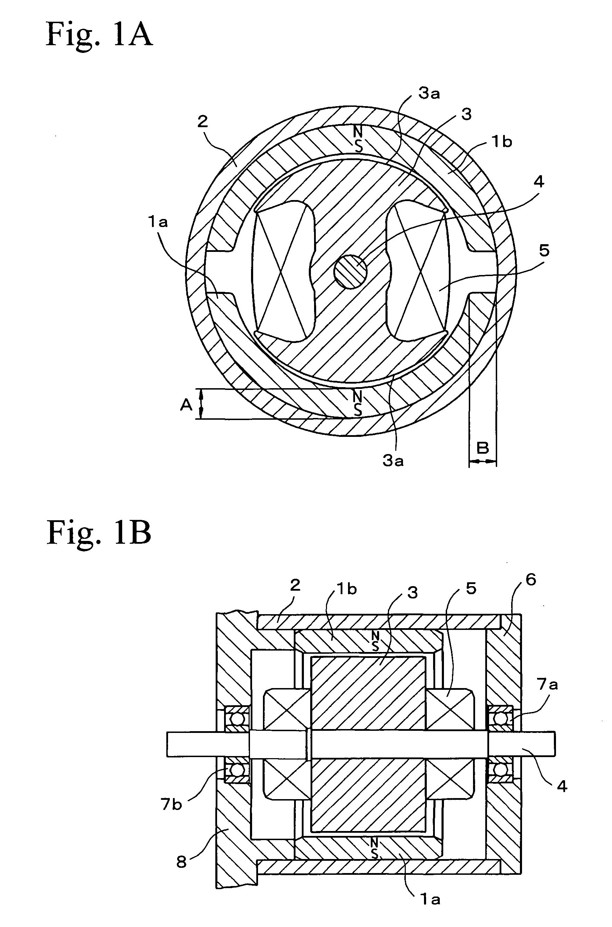

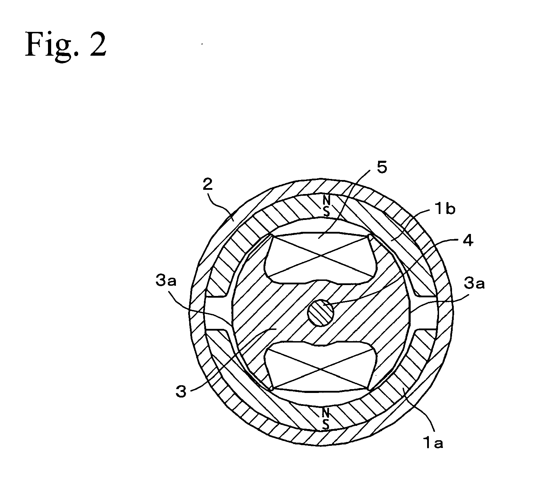

Embodiments of the invention will hereinafter be explained with reference to the figures. Fig. 1A and Fig. 1B are a cross-section view and a longitudinal-section view showing a structure of a proportional rotary torquer according to the present invention. In Fig. 1A, reference numerals 1a and 1b denote two permanent magnets, which are secured on the inner surface of a yoke 2 that is a stator. The permanent magnet 1a has a north magnetic pole on the inside thereof and a south magnetic pole on the outside thereof (on the side facing the yoke 2). The permanent magnet 1b has a south magnetic pole on the inside thereof and a north magnetic pole on the outside thereof (on the side facing the yoke 2). A rotor core 3 has salient poles 3a, and one or more rotor coils are wound between the salient poles 3a. A rotor shaft 4 is provided at the center of the rotor core 3. In Fig. 1B, the above yoke 2 is secured on a holder 6 and a location holder 8. Bearings 7a and 7b, which rotatably hold the rotor shaft 4 penetrating the holder 6 and the location holder 8, are provided on the holder 6 and the location holder 8. Fig. 2 shows a state in which an exciting current is supplied to the rotor coils 5 and the rotor core 3 rotates across 90 degrees.

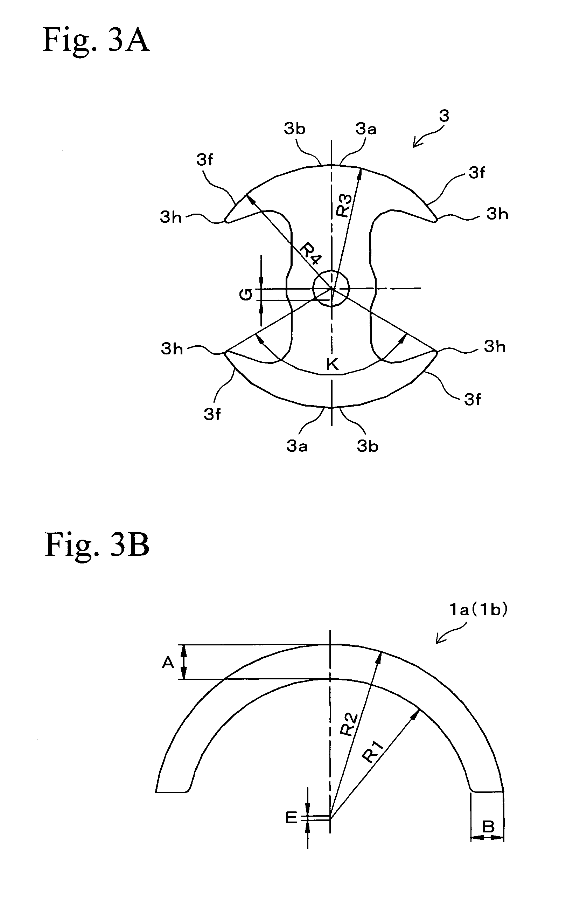

Fig. 3A is a plan view showing a structure of the above rotor core, and Fig. 3B is a plan view showing a structure of the above permanent magnet. As shown in Fig. 3A, the salient poles 3a formed at the rotor core 3 have circular arcs 3b having radii R3 at the circumferential center portions, and circular arcs 3f having radii R4 at the circumferential end portions. That is, the facing surfaces of the salient poles 3a, which face the permanent magnets 1a and 1b, are formed in the shapes of circular arc shapes of which the radii of circular arcs 3b at the circumferential center portions and that of circular arcs 3f at circumferential end portions are different from each other, and a distance G exists between the center positions of the circular arcs having the radii R3 and R4. Specifically, the distance from the radial outlines of the circumferential center positions of the salient poles 3a to the rotation center of the rotor core 3 are not more than 99% of that from the radial outlines of the circumferential end portions of the salient poles 3a to the rotation center of the rotor core 3.

As shown in Fig. 3B, each of the permanent magnets 1a and 1b has a facing surface facing the rotor formed by a circular arc having a radius R1 and an opposite surface facing the yoke 2 formed by a circular arc having a radius R2. The radial thickness B of each circumferential end portion of the magnets 1a and 1b is about from 90% to 95% of the radial thickness A of each circumferential center portion of the permanent magnets 1a and 1b. A distance E exists between the center positions of the circular arcs of the surface facing the rotor and the surface facing the yoke 2.

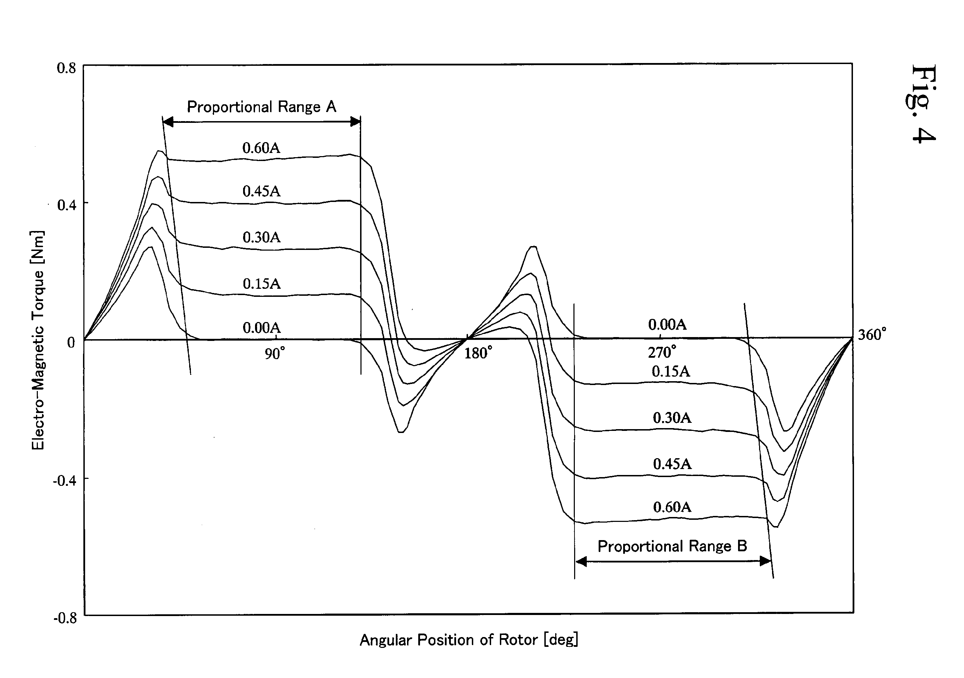

Fig. 4 is a graph showing one example of the relationship between the angular position of a rotor and the electro-magnetic torque at different magnitude of the exciting currents. As shown in Fig. 4, it is confirmed that the electro-magnetic torque is constant within an angular displacement range of the rotor, which is not less than 90 degrees, at a constant exciting current, and the magnitude of the electro-magnetic torque is in proportion to that of the exciting current (Hereinafter, the angular displacement range is simply referred to as a "proportional range"). In the case in which the rotor is positioned within a proportional range A, the electro-magnetic torque generated by an exciting current is in a counterclockwise direction. In the case in which the rotor is positioned within a proportional range B, the electro-magnetic torque generated by the above exciting current is in a clockwise direction. It is confirmed that in the case in which the exciting current is applied in the opposite direction, the electro-magnetic torque is generated in the opposite direction.

That is, according to the proportional rotary torquer of the Embodiment, the radial thicknesses of the permanent magnets 1a and 1b at the circumferential end portions are from 90% to 95% of that at the circumferential center portions. The distances from the radial outline of the circumferential center portion of the salient poles 3a to the rotation center of the rotor core 3 are not more than 99% of that from the circumferential end portion to the rotation center of the rotor core 3. The angle between the line connecting one of circumferential outlines of the salient pole and the rotation center of the rotor core 3 and the line connecting the other circumferential outline of the same salient pole and the rotation center of the rotor core is not less than 100 degrees. The magnitude of the electro-magnetic torque produced by the proportional rotary torquer is proportional to that of the exciting current supplied to the rotor coils 5, within the proportional range that is not less than 90 degrees. In the case without the supply of the exciting current to the rotor coils 5, the torque produced by the permanent magnets 1a and 1b is zero within the above proportional range.

In Fig. 4, the proportional range for the proportional rotary torquer of the Embodiment to be practically applied to various devices is shown. Within this range, a constant electro-magnetic torque is generated at a constant exciting current. In the case without the supply of exciting current, the rotation of the rotor may stops at any position within the proportional range, since the cogging torque of the permanent magnets 1a and 1b is zero within the range. As shown in Fig. 4, the proportional range within which the constant electro-magnetic torque is generated at a constant exciting current extends together with the increase of the exciting current.

In the proportional rotary torquer of the Embodiment, the rotor can be rotated to an angular position proportional to the magnitude of the exciting current and held thereat, if, for example, connecting the rotor with a torque spring to make the opposite torque generated by the spring be proportional to the angular displacement of the rotor.

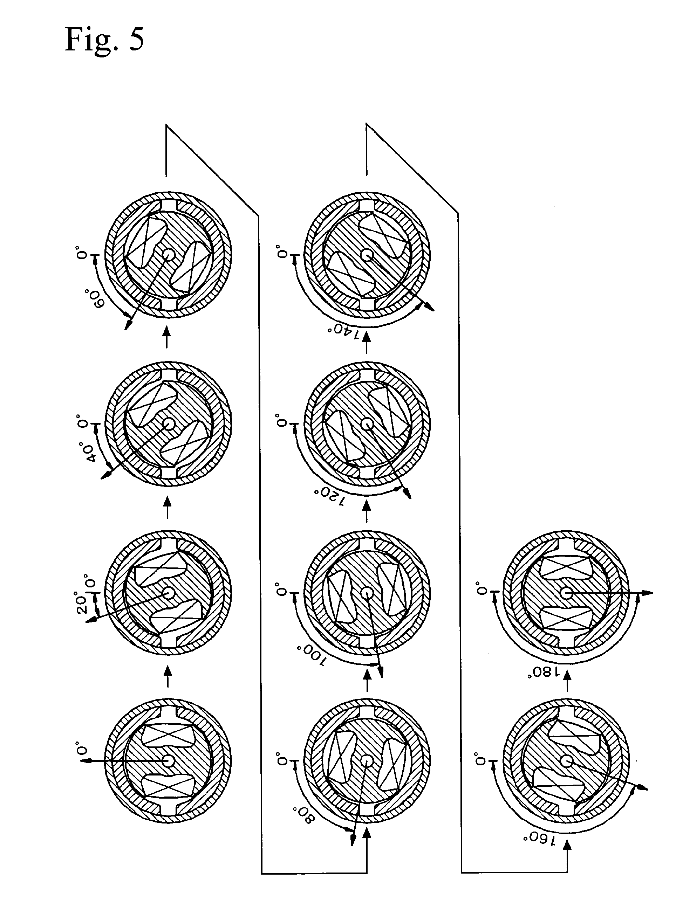

Fig. 5 shows the states in which the rotor rotates by 20 degrees within an angular displacement range from "0 degree" to "180 degrees" without the supply of exciting current.

As to the proportional rotary torquer of this Embodiment, in the case that it is applied to a valve of a throttle body, the valve can be directly driven, no reduction mechanism is needed, and the angular aperture of the valve can be controlled with high accuracy since it is proportional to the magnitude of the exciting current. For the same reason, a sensing mechanism for sensing the angular aperture of a valve, which has problems in durability, lifetime, and accuracy, is not required, too. Since no brush is needed, the durability and the lifetime can be improved. Since no reduction gear mechanism is required, the cost reduction and the reliability can be improved. High electro-magnetic torque can be obtained at a low exciting current, and a long period driving can be performed at a high electro-magnetic torque. Since inexpensive magnetic material such as ferrite magnet can be used for the permanent magnet, the cost reduction is possible.

In the above embodiments, in order to make the radial thickness B of the circumferential end portion of each permanent magnet be smaller than the radial thickness A of the circumferential center portion thereof, the facing surface of each permanent magnet facing the rotor core 3 and the opposite surface facing the yoke 2 are formed in the shapes of circular arc surfaces having center positions different from each other. Instead of this, the facing surfaces of the permanent magnets 1a and 1b facing the rotor core 3 may be formed in the shapes of elliptical surfaces. The facing surfaces of the permanent magnets 1a and 1b at the circumferential end portions, which face the rotor core 3, may be formed in the shapes of flat-cut surfaces. Non-magnetized regions may be formed at the circumferential end portions of the permanent magnets 1a and 1b. In this case, the same effects as the case in which the thickness is gradually reduced can be obtained.

In the above embodiments, in order to make the distance from the radial outline of the circumferential center portion of the salient pole 3a to the rotation center of the rotor core 3 be smaller than that from the radial outline of the circumferential end portion of the salient pole 3a to the rotation center of the rotor core 3, the facing surfaces of the rotor core 3, which face the permanent magnets 1a and 1b, are formed in the shapes of circular arc surfaces having the center positions different from each other. Instead of this, the facing surfaces of the rotor core 3, which face the permanent magnets 1a and 1b, may be formed in the shapes of elliptical surfaces. The facing surfaces of the salient poles of the rotor core 3 at the circumferential end portions, which face the permanent magnets 1a and 1b, may be formed in the shapes of flat-cut surfaces.

Although the rotor rotates with respect to the stator in the above embodiments, the present invention can be applied to a structure in which the stator rotates with respect to the fixed rotor. In order to make the angular displacement be proportional to the magnitude of the supplied exciting current, it is effective using an elastic member to supply the opposite torque proportional to the angular displacement of the rotor, so that an open-loop control can be realized without the need for sensors to feed back the angular position.

The proportional rotary torquer of the present invention can be applied not only to valves, such as throttle body valves, pressure control valves, proportional bypass valves, but also to various fields, such as peripheral devices for driving a drive of a computer, automatic payment machines, control of laser beam deviation, direction control of parabolic antennas of man-made satellites, direction control of solar power generators, control of automatic tracking apparatuses of cameras. The present invention can be applied not only to the structures that may produce the opposite torque proportional to the angular displacement of the rotor, but also to the structures which only load the rotor with the dead weight of the components driven by the proportional rotary torquer or other resistance. In this case, although it is required using sensors to detect and feed back the angular position of the rotor, the rotation speed can be controlled in accordance with the magnitude of the supplied exciting current if the load is approximately constant.

## Claims

1. A proportional rotary torquer comprising:
a stator having two permanent magnets; and
a rotor having a rotor core which two salient poles are formed at, and one or more rotor coils are wound around;
wherein an electric current is supplied to the rotor coils, so that a relative angle position of the rotor and the stator is displaced;
wherein the permanent magnet has two circumferential end portions and one circumferential center portion, and the radial thickness of the circumferential end portion is from 90% to 95% of the radial thickness of the circumferential center portion;
wherein the distance from the radial outline of the center portion of the salient pole to the rotation center of the rotor core is not more than 99% of the distance from the radial outline of the circumferential end portion of the salient pole to the rotation center of the rotor core; and
wherein the angle between the line connecting one of the circumferential outlines of the salient pole and the rotation center of the rotor core and the line connecting the other circumferential outline of the same salient pole and the rotation center of the rotor core is not less than 100 degrees.

2. A proportional rotary torquer according to claim 1, wherein the proportional rotary torquer is structured such that:
the radial thickness of the permanent magnet at the circumferential end portions being smaller than the radial thickness of the permanent magnet at the circumferential center portion;
the distance from the radial outline of the center portion of the salient pole to the rotation center of the rotor core being smaller than the distance from the radial outline of the circumferential end portions of the salient pole to the rotation center of the rotor core; and
the angle between the line connecting one of circumferential outlines of the salient pole and the rotation center of the rotor core and the line connecting the other circumferential outline of the same salient pole and the rotation center of the rotor core being an obtuse angle.

3. A proportional rotary torquer according to claim 1, wherein the rotor core and the permanent magnet have facing surfaces facing each other, the facing surfaces of the rotor core and the permanent magnet formed in the shapes of the circular arc surfaces of which center positions are different from each other.

4. A proportional rotary torquer according to claim 1, wherein the permanent magnet has a facing surface facing the rotor core, the facing surface formed in the shape of an elliptical surface.

5. A proportional rotary torquer according to claim 1, wherein the permanent magnet has a facing surface facing the rotor core, the facing surface at the circumferential end portion formed in the shape of a flat-cut surface.

6. A proportional rotary torquer according to claim 1, wherein the rotor core has two facing surfaces respectively facing the two permanent magnets, each of the facing surfaces of the rotor core formed in the shapes of a plurality of circular arc surfaces of which center positions are different from each other.

7. A proportional rotary torquer according to claim 1, wherein the rotor core has two facing surfaces respectively facing the two permanent magnets, each of the facing surfaces formed in the shape of an elliptical surface.

8. A proportional rotary torquer according to claim 1, wherein the rotor core has two facing surfaces respectively facing the two permanent magnets, the facing surface at the circumferential end portion of the salient pole formed in the shape of a flat-cut surface.

9. A proportional rotary torquer according to claim 1, wherein the permanent magnet has two circumferential end portions, each of which has a non-magnetized region formed thereat.

10. A proportional rotary torquer according to claim 1, wherein the proportional rotary torquer further comprises one or more elastic members generating the torque at the magnitude proportional to the angular displacement of the rotor and in the direction opposite to the rotation direction of the rotor.
